Europäisches Patentamt

European Patent Office

Office européen des brevets

(19)

(11) **EP 1 025 667 B1**

(12) **FASCICULE DE BREVET EUROPEEN**

(45) Date de publication et mention
de la délivrance du brevet:
**20.07.2005 Bulletin 2005/29**

(21) Numéro de dépôt: **98947644.5**

(22) Date de dépôt: **12.10.1998**

(51) Int Cl.⁷: **H04L 1/20**, H04H 1/00

(86) Numéro de dépôt international:
**PCT/FR1998/002179**

(87) Numéro de publication internationale:
**WO 1999/020017 (22.04.1999 Gazette 1999/16)**

(54) **PROCEDE ET SYSTEME D'EVALUATION, A LA RECEPTION, DE LA QUALITE D'UN SIGNAL NUMERIQUE, TEL QU'UN SIGNAL AUDIO/VIDEO NUMERIQUE**

VERFAHREN UND SYSTEM ZUR EMPFANGSSEITIGEN AUSWERTUNG DER QUALITÄT EINES DIGITALEN SIGNALS Z.B. EINES DIGITALEN TON- UND BILDSIGNALS

METHOD AND SYSTEM FOR ASSESSING, AT RECEPTION LEVEL, THE QUALITY OF A DIGITAL SIGNAL, SUCH AS A DIGITAL AUDIO/VIDEO SIGNAL

(84) Etats contractants désignés:
**AT BE CH CY DE DK ES FI FR GB GR IE IT LI LU MC NL PT SE**

(30) Priorité: **13.10.1997 FR 9712763**

(43) Date de publication de la demande:
**09.08.2000 Bulletin 2000/32**

(73) Titulaire: **TDF**
**75015 Paris (FR)**

(72) Inventeurs:
• **MASSE, Denis**
**F-57580 Rosselange (FR)**

• **BAINA, Jamal**
**F-54000 Nancy (FR)**

(74) Mandataire: **Fréchède, Michel**
**Cabinet Plasseraud**
**65/67 rue de la Victoire**
**75440 Paris Cedex 09 (FR)**

(56) Documents cités:
**WO-A-95/12178**          **WO-A-96/17454**
**WO-A-96/31009**          **FR-A- 2 713 425**
**US-A- 5 619 532**

## Description

La transmission des informations de toute nature est, à l'heure actuelle, un élément essentiel de la vie économique et culturelle.

Les techniques de transmission, de plus en plus orientées vers la transmission de signaux numériques, ont pour objet une réduction des débits de transmission, par codage et compression-décodage décompression, afin de ne pas surcharger les réseaux de transmission et permettre ainsi une utilisation optimisée de ces derniers, tout en conservant toutefois une haute qualité de transmission.

Dans le domaine plus particulier de la transmission de signaux numériques tels que les signaux audio/vidéonumériques, la notion de qualité du signal transmis s'analyse essentiellement en une qualité subjective de ce dernier. Ainsi, pour un signal sonore audionumérique ou audio/vidéonumérique, la qualité subjective de ce signal sonore codé-décodé est une qualité estimée à l'aide de tests subjectifs. Ces tests subjectifs consistent essentiellement à attribuer une note de valeur à ce signal sonore codé-décodé en faisant estimer sa qualité par un ensemble d'auditeurs.

Des évaluations de la qualité d'un signal, de façon générale, sont décrites dans les documents de l'art antérieur WO-95/12178, FR-2713425, US-5619532, WO-96/31009 et WO-96/17454.

Dans le cadre de la mise en oeuvre des techniques de compression numérique des signaux audionumériques, différents modèles psycho-acoustiques ont été développés. Ces modèles ont en outre permis la mise en oeuvre de processus de mesures perceptuelles objectives permettant d'évaluer la qualité subjective des signaux codés audionumériques.

Ces processus de mesures perceptuelles objectives fonctionnent tous suivant un principe identique consistant à comparer le signal sonore codé-décodé au signal d'origine. Le signal d'origine est constitué par le signal audionumérique avant codage et compression, encore appelé signal de référence. La mise en oeuvre des processus précités nécessite donc de disposer d'un signal de référence, lequel doit de plus être finement synchronisé avec le signal audionumérique à tester. De telles contraintes peuvent facilement être satisfaites en simulation, afin, par exemple, d'évaluer de manière logicielle un processus de codage, ou lors de la transmission par diffusion d'un signal audionumérique ou audio/vidéonumérique, lors de l'étape d'émission de ce dernier, afin d'évaluer la qualité objective d'un signal codé transmis. On dispose nécessairement, dans ce dernier cas, du signal d'origine, et il est possible de déterminer le retard introduit par le processus permettant d'engendrer le signal codé pour resynchroniser finement ce dernier, signal à tester, et le signal de référence. Tel n'est toutefois aucunement le cas lors de la réception du signal audionumérique ou audio/vidéonumérique au cours de cette transmission. Le seul moyen, à l'heure actuelle, pour évaluer la qualité d'un signal diffusé est, dans le cas d'un signal audionumérique, de l'écouter pour en évaluer la qualité subjective.

La présente invention a pour objet de remédier à l'inconvénient précité, afin de permettre l'application, à la réception, de processus d'évaluation directe de la qualité de transmission d'un signal numérique diffusé, et, dans le cas plus spécifique d'un signal audionumérique ou audio/vidéonumérique, de mesures perceptuelles objectives.

Cet objet est atteint par la mise en oeuvre d'un procédé d'évaluation de la qualité d'un signal numérique conforme à la revendication 1.

La présente invention trouve application à la transmission de signaux numériques par voie hertzienne ou satellitaire, en particulier dans le cas de signaux audio et/ou audio/vidéonumériques, tels que des signaux de télévision ou des signaux radio.

Une description plus détaillée du procédé et du système d'évaluation, à la réception, de la qualité d'un signal numérique, objets de la présente invention, sera maintenant donnée ci-après, en liaison avec les dessins dans lesquels :

- la figure 1 représente un schéma synoptique illustratif de la mise en oeuvre du procédé, objet de la présente invention ;
- la figure 2a représente un détail de mise en oeuvre spécifique du procédé, objet de la présente invention, pour une évaluation de la qualité de transmission en temps réel de manière discrète ou discontinue ;
- la figure 2b représente un détail de mise en oeuvre spécifique du procédé, objet de l'invention, dans un mode de réalisation préférentiel permettant une évaluation de la qualité de transmission en temps réel de manière sensiblement continue ;
- la figure 2c représente, de manière illustrative, un exemple spécifique de relation temporelle entre un signal numérique diffusé reçu, à évaluer, et un signal de référence diffusé reçu, permettant d'effectuer un calcul de distance en continu entre ces deux signaux ;
- la figure 2d représente, de manière illustrative, un processus de synchronisation fine entre le signal de référence diffusé reçu et le signal numérique diffusé reçu, permettant une mise en relation temporelle de ces signaux, telle que par exemple représentée en figure 2c ;
- la figure 2e représente un mode opératoire non limitatif permettant de réaliser l'étape de calcul de distance entre le signal de référence diffusé reçu et le signal numérique diffusé reçu représentée en figure 1 ;
- la figure 2f représente une variante de réalisation du mode opératoire représenté en figure 2e mise en oeuvre lorsque le signal de référence est formé par un signal de densité spectrale de puissance calculé à l'émission ;

- les figures 3a et 3b représentent, dans un réseau de transmission par diffusion d'un signal numérique, un dispositif d'évaluation, à la réception, placé côté émission, de la qualité de la diffusion de ce signal numérique dans un premier mode, respectivement un deuxième mode de réalisation ;

- la figure 3c représente, dans un réseau de transmission par diffusion d'un signal numérique, un dispositif d'évaluation, à la réception, placé côté réception, de la qualité de la diffusion de ce signal numérique ;

- la figure 3d représente un détail de réalisation de la figure 3c.

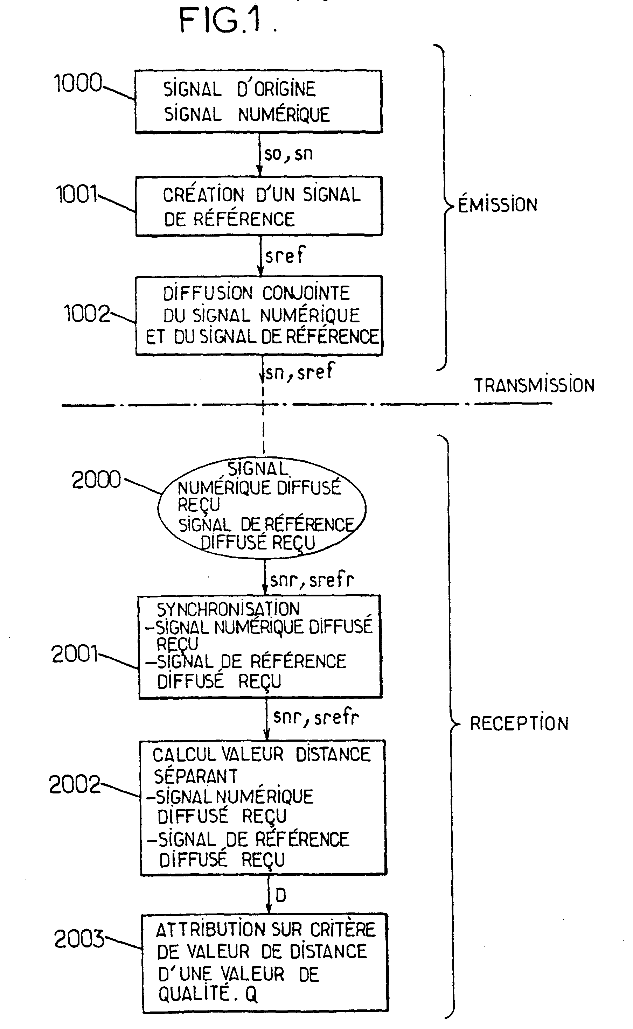

Une description plus détaillée du procédé d'évaluation à la réception de la qualité d'un signal numérique, objet de la présente invention, sera maintenant donnée en liaison avec la figure 1.

D'une manière générale, on indique que le procédé, objet de la présente invention, est susceptible d'être appliqué à tout type de signal numérique, mais en particulier à des signaux audio/vidéonumériques tels que des signaux de télévision par exemple, comportant de manière classique une composante audio, laquelle, dans le cadre de l'exposé du procédé, objet de la présente invention, est réputée constituer un signal audionumérique. Il est également susceptible d'être appliqué à la partie vidéo des signaux vidéonumériques, dans des conditions qui seront explicitées ultérieurement dans la description.

Le procédé, objet de la présente invention, est destiné à être mis en oeuvre sur tout réseau de diffusion d'un tel signal, ce signal numérique étant en conséquence diffusé à partir d'un signal d'origine véhiculant l'information transmise. Le réseau de transmission ou de diffusion de ce signal numérique est ainsi réputé être constitué par tout réseau hertzien ou satellitaire permettant la diffusion de ce signal numérique à partir d'une tête de réseau d'émission ainsi que la réception de ce signal numérique à partir d'au moins un point de réception spécifique. Les caractéristiques relatives au mode de transmission par voie hertzienne et/ou satellitaire de ce type de réseau sont connues de l'état de la technique et, pour cette raison, ne seront pas décrites en détail.

Ainsi, on dispose, au niveau de la tête d'émission du réseau, d'un signal d'origine, lequel peut être constitué par un signal en bande de base du signal à transmettre ainsi que d'un signal numérique proprement dit, lequel est numérisé de manière classique, afin de permettre la transmission par diffusion de celui-ci par voie hertzienne ou satellitaire.

Ainsi que représenté sur la figure 1 et conformément au procédé, objet de la présente invention, on dispose en tête d'émission du réseau, en une étape 1000, non seulement du signal d'origine, noté so, mais également du signal numérique proprement dit, noté pour cette raison sn.

Selon la même figure 1 précitée, le procédé, objet de la présente invention, consiste, à l'émission, en une étape 1001, à engendrer un signal de référence, noté sref, représentatif du signal d'origine. Par signal de référence représentatif du signal d'origine, on indique que le signal de référence reproduit, au moins partiellement, ce signal d'origine ou certaines caractéristiques spécifiques de celui-ci.

On comprend en particulier que le signal de référence peut ainsi être obtenu, par échantillonnage, ainsi qu'il sera décrit ultérieurement dans la description, soit du signal d'origine proprement dit, soit du signal numérique précédemment mentionné, le signal numérique étant lui-même par définition représentatif du signal d'origine.

Suite à l'étape de création d'un signal de référence sref, le procédé, objet de la présente invention, consiste ensuite, en une étape 1002, à diffuser conjointement le signal numérique sn et le signal de référence sref.

En ce qui concerne le processus de diffusion conjointe du signal numérique sn et du signal de référence, on indique que ce dernier peut être inséré dans le train numérique constitutif du signal numérique à diffuser par exemple.

On comprend que dans un mode de mise en oeuvre simple du procédé, objet de la présente invention, le signal de référence peut être constitué par certains échantillons du signal numérique sn, ces échantillons du signal numérique sn étant pris sur une tranche ou fenêtre de durée déterminée du signal numérique et insérés à des endroits spécifiques du train numérique constitutif du signal numérique à diffuser.

Ainsi, dans le cas où le signal numérique est constitué au départ par un signal de télévision numérique par exemple, le signal de référence peut être inséré, à titre d'exemple non limitatif, dans le flux MPEG par utilisation des bits de données auxiliaires privées prévus pour transmettre des données.

A l'émission, on dispose donc d'un signal composite constitué par un train numérique résultant, composé du train numérique constitutif du signal numérique à diffuser sn, dans lequel le signal de référence sref a été inséré.

L'ensemble de ces signaux étant ainsi transmis par diffusion, le procédé objet de la présente invention consiste en outre, à la réception, au niveau du point de réception du réseau de diffusion précité, à effectuer la réception du signal numérique et du signal de référence ainsi diffusés.

Ainsi, en référence à la figure 1, on dispose à la réception, en une étape 2000, du signal numérique diffusé reçu snr et du signal de référence diffusé reçu, noté pour cette raison srefr.

Bien entendu, en raison même du processus d'insertion du signal de référence sref dans le signal numérique sn, le signal audionumérique diffusé reçu snr et le signal de référence diffusé reçu srefr disponibles à l'étape 2000 précitée, ne sont pas synchronisés de manière suffisamment précise pour permettre la mise en oeuvre directe d'un processus d'évaluation de la qualité de transmission du signal numérique précité.

Dans ce but, le procédé, objet de la présente invention, consiste en outre, à la réception, ainsi que représenté en figure 1, en une étape 2001, à synchroniser le signal numérique diffusé reçu snr et le signal de référence diffusé reçu srefr, puis ensuite, en une étape 2002, à calculer une valeur de distance, cette valeur de distance étant définie comme la différence d'identité séparant le signal numérique diffusé reçu snr du signal de référence diffusé reçu srefr. La valeur de distance est notée D sur la figure 1.

L'étape 2002 de calcul de la valeur de distance D est alors suivie d'une étape 2003 consistant à attribuer, sur critère de valeur de la distance D précitée, une valeur de qualité Q selon un critère prédéterminé.

Des exemples de modes de réalisation spécifiques des étapes de mise en oeuvre du procédé, objet de la présente invention, seront maintenant donnés ci-après.

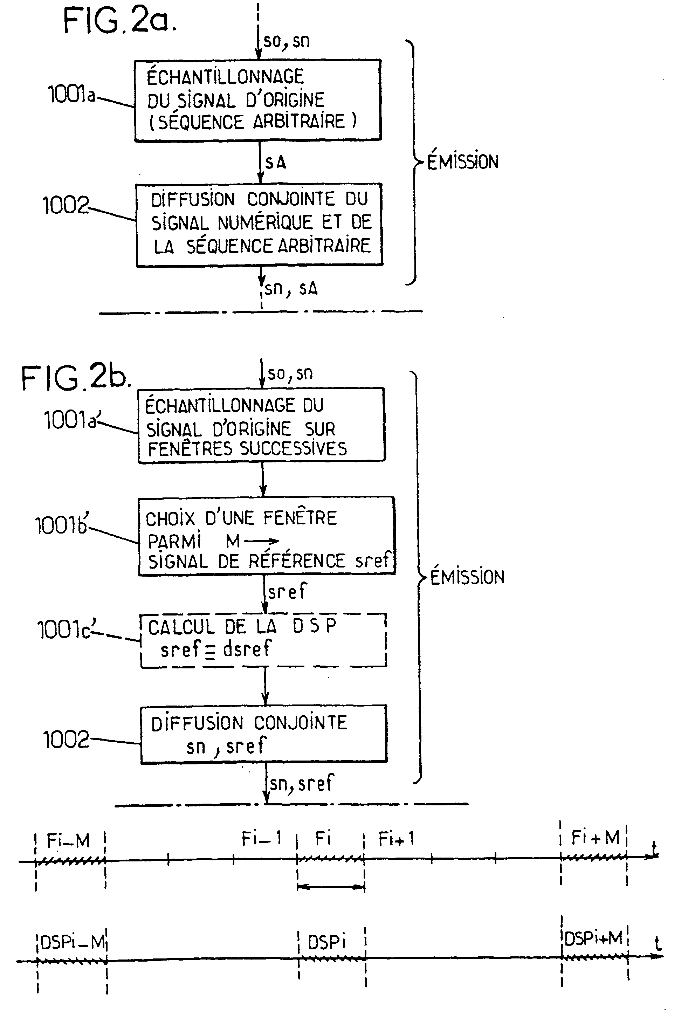

Dans le cas où la mise en oeuvre d'une évaluation en temps réel non continue de la qualité de diffusion d'un signal numérique est recherchée, l'étape 1001 de création d'un signal de référence peut consister par exemple à engendrer une séquence de signal numérique arbitraire. Cette séquence arbitraire peut, de préférence, être constitutive du signal d'origine. Dans ces conditions, l'étape 2002 de calcul de valeur de distance, c'est-à-dire de la différence d'identité séparant le signal numérique diffusé reçu du signal de référence diffusé reçu, est alors conduite entre ce signal numérique diffusé reçu et la séquence arbitraire. Sur la figure 2a, on a représenté la mise en oeuvre par échantillonnage du signal d'origine par exemple, en une étape 1001a permettant d'engendrer la séquence arbitraire notée SA sur la figure précitée.

A la limite, la séquence arbitraire SA peut être constituée par une séquence connue a priori, laquelle peut être mémorisée avant diffusion de celle-ci. En effet, de telles séquences, telles que les séquences de génériques, le cas échéant, de publicités ou les séquences connues sous le nom de *"jingles"* dans les programmes télédiffusés sont diffusées plusieurs fois par jour et peuvent donc être stockées par avance. Dans ces conditions, l'étape de transmission du signal de référence peut même être sensiblement supprimée, le calcul de valeur de distance à l'étape 2002 pouvant être réalisée à partir d'un enregistrement ou d'une mémorisation de cette séquence arbitraire SA au niveau de la réception.

Au contraire, et dans un deuxième mode de réalisation préférentiel, en vue d'une évaluation en temps réel de la qualité de diffusion d'un signal numérique diffusé en émission, l'étape de génération du signal de référence 1001 peut consister, ainsi que représenté en figure 2b, à effectuer un échantillonnage du signal d'origine ou, de préférence, du signal numérique sn en une étape 1001a' sur des fenêtres ou des tranches de durée arbitraire successives déterminées, chaque fenêtre étant notée $F_i$ sur la figure 2b précitée. Les fenêtres successives sont notées $F_{i-1}$, $F_i$, $F_{i+1}$ sur la figure 2b précitée.

L'étape 1001a' d'échantillonnage du signal d'origine ou du signal numérique sn est alors suivie d'une étape 1001b' consistant à effectuer le choix d'une fenêtre parmi M, M valeur entière donnée, pour constituer le signal de référence sref.

Sur l'exemple représenté en figure 2b, les fenêtres choisies sont représentées hachurées dans un mode de réalisation dans lequel une fenêtre parmi M = 4 fenêtres successives, $F_{i-M}$, $F_i$, $F_{i+M}$, est retenue par mémorisation successive pour constituer ainsi le signal de référence sref. Les tranches temporelles ou fenêtres précitées sont alors diffusées conjointement avec le signal numérique sn pour constituer le signal de référence diffusé conjointement avec ce signal numérique. Ainsi, à titre d'exemple non limitatif, chaque fenêtre $F_{i-M}$, $F_i$, $F_{i+M}$ est insérée dans le train numérique du signal numérique sn. Dans le cas d'un signal de télévision par exemple, on indique que chaque fenêtre peut être insérée dans le flux MPEG par utilisation des bits de données auxiliaires privées prévus pour transmettre des données.

En ce qui concerne la durée des fenêtres ou tranches temporelles précitées, on indique que cette durée peut être arbitraire et prise égale par exemple à $\tau_i$ = 40 ms.

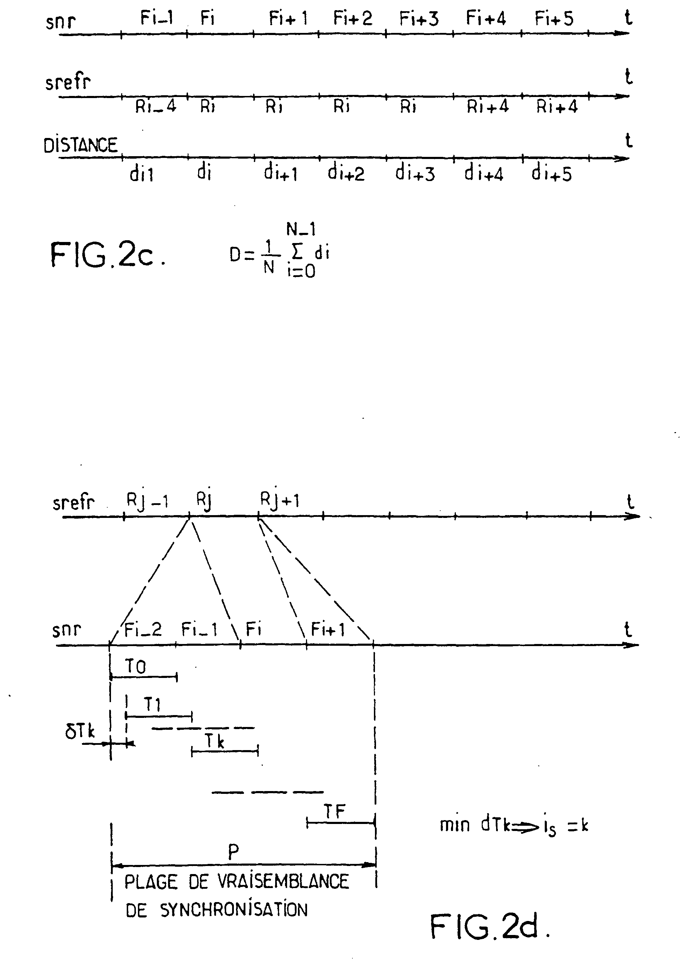

En ce qui concerne l'étape 2002 de calcul de la valeur de distance D séparant le signal numérique diffusé reçu snr et le signal de référence diffusé reçu srefr, un mode de mise en oeuvre du processus de calcul, à partir de d'un signal numérique diffusé reçu snr et d'un signal de référence diffusé reçu srefr synchronisés, sera maintenant donné en liaison avec la figure 2c. Une description détaillée d'un mode de mise en oeuvre d'un processus de synchronisation de ces signaux sera décrite ultérieurement, en liaison avec la figure 2d.

En référence à la figure 2c, le signal numérique diffusé reçu snr et le signal de référence diffusé reçu srefr étant réputés synchronisés, on dispose, ainsi que représenté sur la figure 2c, d'une part, de la suite des fenêtres $F_{i-1}$, $F_i$, $F_{i+1}$ ... successives, constitutives du signal numérique diffusé reçu snr ainsi que du signal de référence diffusé reçu srefr.

Dans le cas, ainsi que représenté en figure 2c, où le signal de référence est constitué par une fenêtre du signal numérique parmi M, avec dans le cas de la figure 2c, M = 4, on dispose de M valeurs consécutives de références identiques, notées pour cette raison $R_{i-4}$, $R_i$, $R_{i+4}$, correspondant à la fenêtre du signal numérique diffusé reçu de même indice i-4, i, i+4.

Ainsi, pour les fenêtres du signal numérique diffusé reçu snr et notées $F_i$, $F_{i+1}$, $F_{i+2}$ et $F_{i+3}$, la valeur de référence $R_i$ est constituée par la fenêtre correspondante $F_i$ validée pour les quatre fenêtres $F_i$ à $F_{i+3}$ préci-

tées. Il en est de même pour les fenêtres antérieures et postérieures vis-à-vis des valeurs de référence correspondantes.

En référence à la figure 2c, l'étape 2002 de calcul de la valeur de distance D peut alors consister à calculer la distance élémentaire $d_i$ séparant des tranches temporelles du signal numérique diffusé reçu de tranches temporelles correspondantes du signal de référence diffusé reçu. Ces distances élémentaires sont notées $d_i$ sur la figure 2c, chaque distance élémentaire calculée comportant le même indice que la fenêtre correspondante $F_i$ du signal numérique diffusé reçu snr.

Enfin, une moyenne temporelle des distances élémentaires $d_i$ de l'ensemble des tranches temporelles est calculée afin d'obtenir la valeur de distance D proprement dite. Pour N tranches successives telles que les tranches $F_{i-1}$ à $F_{i+5}$ par exemple, telles que représentées sur la figure 2c, la distance proprement dite entre les deux signaux est alors donnée par :

$$D \;=\; \frac{1}{N} \sum_{i=0}^{N-1} d_i$$

Ainsi, grâce à la mise en oeuvre du procédé, objet de la présente invention, il n'est pas nécessaire de définir par avance un ensemble de signaux test, tels que des sinusoïdes, des rampes, des impulsions. Tout signal numérique, qu'il soit signal vidéo, signal de parole ou de musique, peut alors être utilisé lors de mesures perceptuelles objectives par exemple, dès que l'on dispose du signal de référence finement synchronisé avec le signal numérique à évaluer.

Dans le cas plus particulier du mode de mise en oeuvre du procédé, objet de la présente invention, tel que représenté en figures 2b et 2c, pour lequel une diffusion conjointe périodique de certaines tranches temporelles successives à raison d'une tranche temporelle parmi M tranches temporelles successives du signal numérique est effectuée, afin de constituer le signal de référence, la valeur de distance D entre le signal numérique diffusé reçu snr et le signal de référence diffusé reçu vérifie la relation :

$$D \;=\; \frac{1}{N/M} \sum_{i=0}^{N/M-1} d_i .$$

Dans cette relation :

N    désigne le nombre de tranches temporelles successives, sur lequel la moyenne est calculée,

M    désigne un nombre entier, supérieur à 1,

le signal de référence étant constitué par une tranche ou fenêtre temporelle parmi M du signal numérique sn.

Dans ces conditions, la valeur de distance D évaluée reste fiable dès lors que le rapport N/M est suffisamment grand. Ainsi, pour M = 4, on indique que N peut prendre une valeur supérieure à 40.

Une description plus détaillée du processus de synchronisation fine entre le signal numérique diffusé reçu snr et le signal de référence diffusé reçu srefr à l'étape 2001 de la figure 1 pour obtenir les signaux synchronisés représentés par exemple en figure 2c, sera maintenant donnée en liaison avec la figure 2d.

Ainsi que représenté sur la figure précitée, le procédé, objet de la présente invention, afin d'assurer la synchronisation fine des signaux précités, consiste à définir, sur le signal numérique diffusé reçu snr, une plage P de vraisemblance de synchronisation de ce signal vis-à-vis du signal de référence srefr, en particulier d'une valeur ou fenêtre, tranche temporelle, de référence $R_j$ donnée. L'indice j indique une valeur quelconque de cet indice correspondant par exemple à l'une des valeurs d'indice i-4, i ou i+4 de la figure 2c.

On comprend en effet que, pour la tranche temporelle de référence $R_j$, il existe dans le signal numérique diffusé reçu snr, une plage, ensemble borné d'intervalles ou tranches temporelles successives $F_i$, pour laquelle l'une des tranches ou fenêtres temporelles $F_i$ du signal numérique diffusé reçu snr présente un maximum de vraisemblance d'identité avec la tranche temporelle de référence $R_j$. Sur la figure 2d, on a représenté, à titre d'exemple non limitatif, quatre fenêtres temporelles $F_{i-2}$, $F_{i-1}$, $F_i$, $F_{i+1}$ réputées constituer la plage P. Il est manifeste que le nombre de fenêtres successives $F_i$ constitutives de la plage P précitée peut être multiplié, seule une puissance de calcul supérieure étant nécessaire pour un nombre de fenêtres successives plus élevé constituant la plage P précédemment citée. On pourra par exemple retenir un nombre de fenêtres successives compris entre 50 et 100.

A partir de la plage P de vraisemblance de synchronisation précédemment citée, telle que représentée en figure 2d, le procédé, objet de la présente invention, consiste alors à subdiviser le signal numérique diffusé reçu snr pendant chaque plage de vraisemblance temporelle en tranches temporelles successives, notées $T_0$, $T_1$, ... $T_k$, ... $T_F$, ainsi que représenté sur la figure 2d. Ces tranches temporelles successives sont décalées d'une valeur temporelle maximale, notée $\delta T_k$, dont la valeur correspond à l'incertitude maximale admissible de synchronisation effective entre le signal numérique diffusé reçu snr et le signal de référence diffusé reçu srefr. On comprend ainsi que les tranches temporelles $T_k$ constituent, sur la plage P de vraisemblance de synchronisation, une fenêtre glissante permettant d'assurer l'exploration de cette dernière.

Conformément au procédé, objet de la présente invention, et afin d'assurer la mise en oeuvre du processus de synchronisation fine telle que représentée en figure 2d, celui-ci consiste en outre, ensuite, à calculer une distance entre chaque tranche temporelle successive décalée $T_k$ du signal numérique reçu snr et la fenêtre de référence $R_j$. Les distances correspondantes sont notées $dT_k$ pour toute tranche temporelle $T_k$ de la plage P de vraisemblance de synchronisation précédemment citée. L'ensemble des valeurs de distance entre chaque tranche temporelle successive décalée et le signal de référence $R_j$ est alors soumis à un processus de tri, de façon à déterminer la valeur minimale de distance sur l'ensemble considéré. Cette valeur minimale est notée min $dT_k$.

Le rang de la tranche temporelle du signal numérique diffusé reçu pour lequel la distance calculée avec le signal de référence est minimale est alors retenu comme valeur de synchronisation, selon la relation :

$$\text{min } dT_k \implies i_s = k$$

où $i_s$ représente le rang de synchronisation de la fenêtre $F_i$ du signal numérique diffusé reçu snr.

En ce qui concerne le processus de calcul de distance, différence d'identité séparant le signal numérique diffusé reçu snr du signal de référence diffusé reçu srefr, tant pour l'attribution du critère de valeur de la qualité à la réception du signal numérique que du processus de synchronisation précédemment cité, on indique que la valeur de distance peut être constituée, dans le cas d'un signal audionumérique, par la distance perceptuelle entre chaque tranche temporelle successive et le signal de référence, ou, le cas échéant, de manière générale pour tout type de signal numérique ou vidéonumérique, par l'écart à la valeur unité de la fonction d'intercorrélation entre chaque tranche temporelle successive, telles que les tranches $T_k$, et la valeur de référence $R_j$ dans le cas de la mise en oeuvre du processus de synchronisation, ou encore dans le cas du processus de calcul de distance à l'étape 2002 de la figure 1.

En ce qui concerne le calcul de la fonction d'intercorrélation, on indique que le signal de référence, constitué par exemple par une fenêtre de référence $R_j$ et la tranche temporelle considérée $T_k$ dans le cas de la mise en oeuvre du processus de synchronisation ou, respectivement, toute tranche ou fenêtre temporelle $F_i$ et la valeur ou tranche temporelle de référence synchronisée $R_i$, dans le cas de la figure 2c, ce mode de calcul de la fonction d'intercorrélation est tout-à-fait classique. En effet, tant la fenêtre $F_i$ du signal numérique diffusé reçu snr que le signal de référence diffusé reçu sref dans sa fenêtre de référence $R_i$, sont constituées d'un même nombre d'échantillons et la fonction d'intercorrélation correspond donc à une définition tout-à-fait classique. Il en est de même pour les tranches temporelles $T_k$ et la tranche temporelle ou fenêtre temporelle de référence $R_j$ pour la mise en oeuvre du processus de synchronisation représenté en figure 2d.

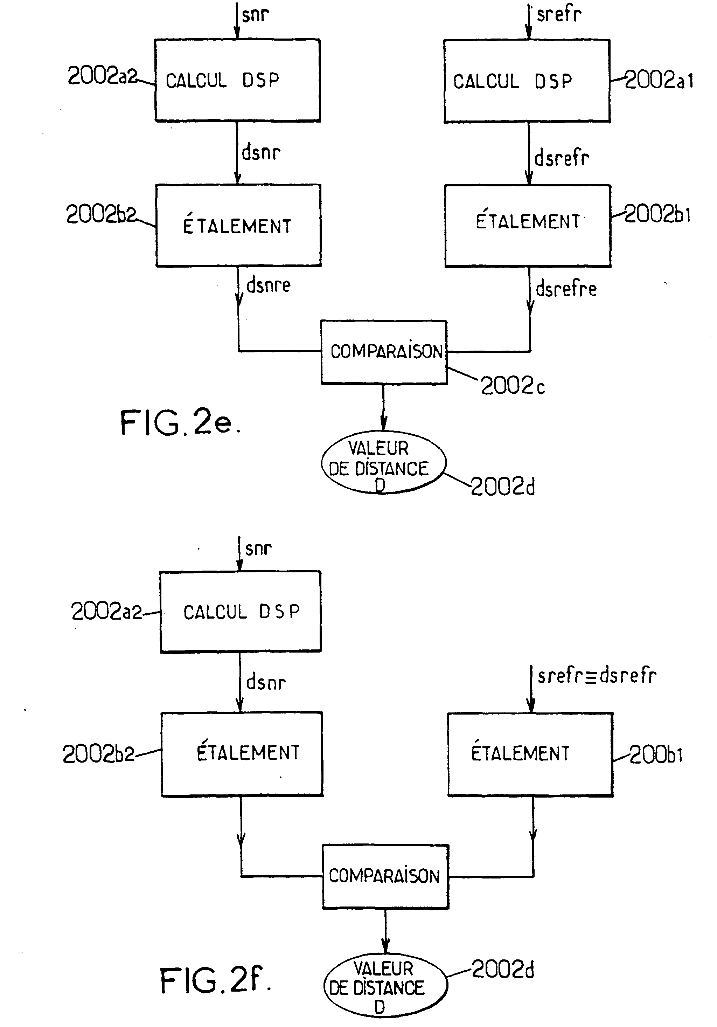

Outre le calcul d'une fonction d'intercorrélation, ainsi que mentionné précédemment, et dans le cas plus particulier où la distance calculée est la distance perceptuelle pour un signal audionumérique par exemple, le processus de calcul proprement dit de la valeur de distance D sera maintenant décrit de manière plus détaillée en liaison avec la figure 2e.

Selon la figure précitée, le processus de calcul consiste au moins, pour au moins une tranche temporelle du signal de référence diffusé reçu srefr et une tranche temporelle du signal audionumérique diffusé reçu snr, à calculer la densité spectrale de puissance du signal de référence diffusé reçu srefr en une étape, $2002a_1$, et la densité spectrale de puissance du signal numérique diffusé reçu snr dans une étape $2002a_2$ pour engendrer un signal de densité spectrale de puissance du signal de référence diffusé reçu et un signal de densité spectrale de puissance du signal audionumérique diffusé reçu, notés chacun pour cette raison dsrefr et dsnr respectivement.

Dans le cas où en particulier le signal à évaluer est constitué par un signal audionumérique, le calcul de la densité spectrale de puissance, tant du signal audionumérique diffusé reçu snr que du signal de référence diffusé reçu srefr, peut avantageusement être effectué en barks.

Suite aux étapes $2002a_1$ et $2002a_2$, le procédé, objet de la présente invention, consiste à appliquer à chaque signal de densité spectrale de puissance dsrefr et dsnr un traitement d'étalement de spectre de fréquence, pour engendrer un signal de densité spectrale de puissance du signal de référence diffusé reçu étalé, respectivement un signal de densité spectrale de puissance du signal audionumérique diffusé reçu étalé, ces signaux étant désignés respectivement dsrefre et dsnre.

Une comparaison à l'étape 2002c est effectuée entre le signal de densité spectrale de puissance du signal de référence diffusé reçu étalé dsrefre et le signal de densité spectrale de puissance du signal audionumérique diffusé reçu étalé dsnre pour engendrer la valeur de distance D obtenue à l'étape 2002d représentée sur la figure 2e.

On rappelle que le calcul de la densité spectrale de puissance en barks des deux signaux précités est justifié pour l'évaluation d'un signal audionumérique en référence au principe des mesures perceptuelles objectives. Ces mesures sont basées sur la transformation de la représentation physique, pression acoustique, niveau, temps et fréquence du signal audionumérique en la représentation acoustique, force sonore, niveau de masquage, temps et bande critique ou barks des deux signaux précités, le signal de référence et le signal audionumérique à évaluer, afin d'effectuer leur comparaison. Cette transformation est ainsi effectuée grâce à une modélisation de l'appareil auditif humain, cette modélisation consistant en une analyse spectrale dans le domaine des barks suivie d'un processus d'étalement de fréquence propre à la perception auditive.

Le calcul de distance peut alors être effectué entre les représentations psycho-acoustiques des deux signaux. Cette distance peut alors être reliée à la qualité du signal à évaluer. Plus la distance est faible et plus le signal à évaluer est proche du signal d'origine, et meilleure est la qualité de diffusion de ce dernier.

Pour une décomposition en tranches temporelles de 40 ms d'un signal audionumérique, ainsi que mentionné précédemment, échantillonné à une fréquence d'échantillonnage Fe = 48 kHz avec une résolution de 16 bits, cette tranche est représentée par 32 kbits de données. La représentation spectrale dans le domaine des barks de cette tranche temporelle peut au contraire être représentée par 768 bits, soit environ 42 fois moins. En effet, pour une résolution spectrale de 1 bark et une analyse couvrant une bande de 1 à 24 barks sur une plage de fréquences de 0 à 15 500 Hz, la représentation spectrale de la tranche consiste en 24 points de 32 bits chacun pour un codage en virgule flottante. Ainsi, compte tenu des traitements proposés, il est possible d'effectuer sur le signal de référence avant transmission et diffusion de celui-ci, le calcul de la densité spectrale de puissance dans le domaine des barks, afin d'assurer la transmission de cette représentation spectrale et non plus la représentation temporelle de ce dernier. Dans ce cas, le débit binaire nécessaire pour assurer la transmission du signal de référence diminue alors largement et peut être évalué à deux fois 18 kbits/ s pour un signal stéréophonique échantillonné à la fréquence d'échantillonnage précitée.

Le procédé, objet de la présente invention, permet alors d'assurer la transmission du signal de référence avec un débit très faible. Cette transmission peut alors être effectuée, soit par un réseau de télécommunications, soit directement dans le but de la diffusion d'un signal de télévision numérique par exemple ou d'une émission radionumérique telle que la diffusion radionumérique connue sous le nom de DAB, pour *Digital Audio Broadcasting*. Dans un tel cas, l'opération de calcul de distance élémentaire de la valeur de la fonction d'intercorrélation est effectuée entre tranches temporelles, suite à application au signal de référence diffusé et au signal audionumérique diffusé d'une transformée fréquentielle et suite au calcul de la densité spectrale de puissance de ces signaux. Cette opération, en ce qui concerne tout au moins le signal de référence, peut être effectuée, à l'émission, de manière avantageuse, afin de diminuer le débit des données transmises pour constituer le signal de référence. Le processus de calcul de distance D à la réception est alors simplifié, ainsi que représenté en figure 2f, dans la mesure où il n'est plus nécessaire de mettre en oeuvre l'opération de calcul de densité spectrale de puissance du signal de référence diffusé reçu, srefr, l'étape 2000a$_1$ de la figure 2e étant en conséquence supprimée.

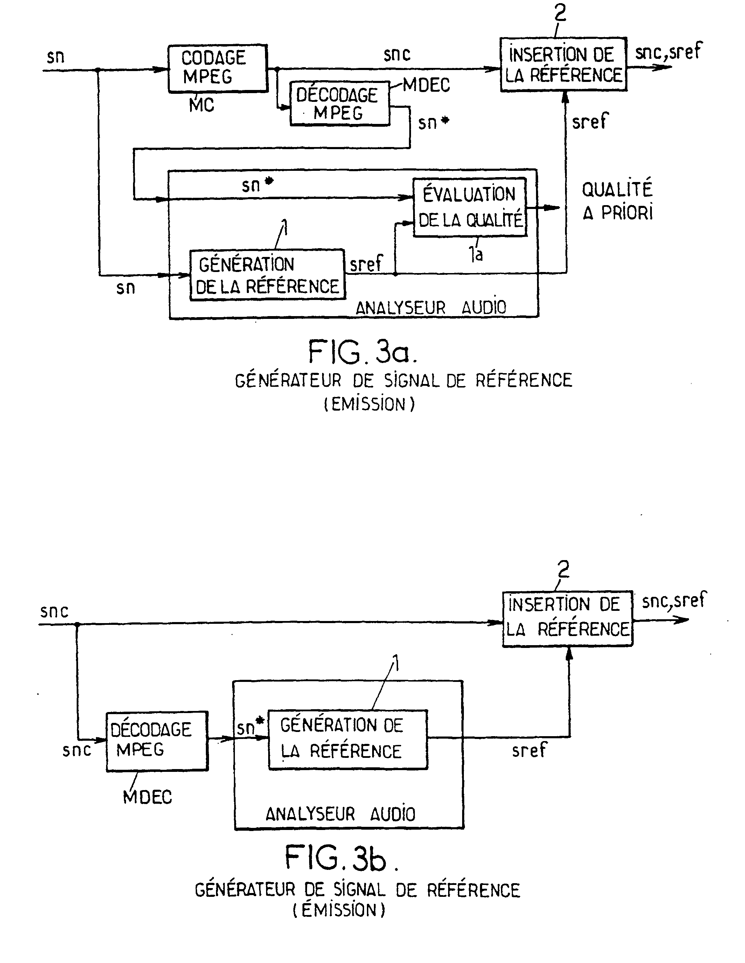

Une description plus détaillée d'un système d'évaluation à la réception de la qualité d'un signal numérique diffusé, objet de la présente invention, et permettant la mise en oeuvre du procédé précédemment décrit dans la description, sera maintenant donnée en liaison avec les figures 3a à 3d.

D'une manière générale, on indique que le système d'évaluation à la réception de la qualité d'un signal numérique diffusé, objet de la présente invention, est intégré à un réseau de transmission par diffusion de ce signal. Bien entendu, afin de ne pas surcharger le dessin, aucun des éléments du réseau de transmission précité n'est représenté sur les figures 3a à 3c.

On indique toutefois que le système, objet de la présente invention, consiste en un module générateur de signal de référence, placé côté émission en amont du dispositif d'émission, ainsi que représenté et référencé 1 sur les figures 3a et 3b. Ainsi qu'il apparaît en référence à la figure 3a notamment, la tête d'émission du réseau comprend, de manière classique, en particulier dans le cas non limitatif où le signal numérique diffusé est un signal de type signal de télévision numérique sn, un module de codage de type MPEG, ce module étant référencé MC et délivrant un signal audionumérique codé, noté snc.

En outre, ainsi qu'il apparaît également sur la figure 3a, le système d'évaluation à la réception de la qualité du signal audionumérique diffusé sn, objet de la présente invention, comprend, formant le générateur du signal de référence précédemment cité, un module 1 générateur d'un signal de référence à partir du signal d'origine, le signal d'origine étant compris comme le signal audionumérique sn précédemment cité dans la description.

Ainsi que représenté sur la même figure, le système d'évaluation à la réception comprend, côté émission, un module 2 d'insertion du signal de référence sref délivré par le module 1 générateur du signal de référence dans le train numérique du signal audionumérique codé snc délivré par le module de codage MPEG portant la référence MC sur la figure 3a. Le module 2 d'insertion du signal de référence sref dans le train numérique du signal audionumérique codé snc, permet d'engendrer un flux binaire qui peut être diffusé grâce aux moyens classiques d'émission, lesquels ne sont pas représentés sur la figure 3a précitée.

En outre, ainsi que représenté sur la même figure 3a, le système d'évaluation à la réception de la qualité du signal audionumérique diffusé, objet de l'invention, formant le générateur du signal de référence, peut comprendre un module de décodage du signal audionumérique codé snc, ce module de décodage portant la référence MDEC et assurant un décodage de type MPEG pour un signal numérique de télévision lorsque celui-ci est codé selon le protocole de codage MPEG. Le module de décodage MDEC délivre un signal audionumérique reconstitué, noté sn*.

Ainsi que représenté sur la figure 3a, le système d'évaluation à la réception de la qualité du signal audionumérique diffusé, objet de l'invention, peut comprendre avantageusement un module, noté 1a, d'évaluation de la qualité a priori du signal codé d'émission, ce module d'évaluation 1a a priori recevant le signal audionumérique reconstitué sn* et le signal de référence sref pour délivrer un signal représentatif de la qualité du signal codé d'émission, ce signal étant bien entendu représentatif de la qualité a priori du signal codé d'émission précité. On indique que le module 1 générateur du signal de référence sref et le module d'évaluation de la qualité a priori $1_a$ constituent en fait un analyseur audio.

Sur la figure 3b, on a représenté une variante de réalisation du module générateur de signal de référence représenté en figure 3a, dans un cas plus particulier spécifique dans lequel ce module est mis en oeuvre directement en aval du module de codage MC de type MPEG pour un signal de télévision numérique. Dans un tel cas, l'ensemble peut être simplifié par rapport au mode de réalisation de la figure 3a dans la mesure où la mise en oeuvre du dispositif représenté en figure 3b est réalisée à partir du signal audionumérique codé snc précédemment mentionné en liaison avec la figure 3a. En outre, le module 1a d'évaluation de la qualité a priori du signal codé d'émission peut être supprimé à titre de simplification. Dans ces conditions, on retrouve, dans le mode de réalisation de la figure 3b, le module de décodage MDEC de type décodage MPEG précédemment mentionné en liaison avec la figure 3a, ce module délivrant le signal audionumérique reconstitué sn* sensiblement identique à celui indiqué en figure 3a. Le module générateur du signal de référence 1, dans l'analyseur audio, délivre à partir de ce dernier signal, le signal de référence sref au module d'insertion du signal de référence 2, lequel délivre de la même façon le signal audionumérique codé snc dans lequel a été inséré le signal de référence sref pour constituer le flux binaire à diffuser, ainsi que mentionné précédemment en liaison avec la figure 3a.

En ce qui concerne la mise en oeuvre des dispositifs tels que représentés en figures 3a et 3b conformément à l'objet de la présente invention, on indique que, d'une part, le signal audionumérique codé snc et le signal de référence sref sont sensiblement ou, à tout le moins, grossièrement synchronisés, l'insertion et la transmission du signal de référence dans le train binaire du signal audionumérique codé snc conservant globalement cette synchronisation avec une précision suffisamment grande pour permettre de définir la plage P de vraisemblance de synchronisation précédemment mentionnée dans la description relativement à la mise en oeuvre du procédé, objet de la présente invention.

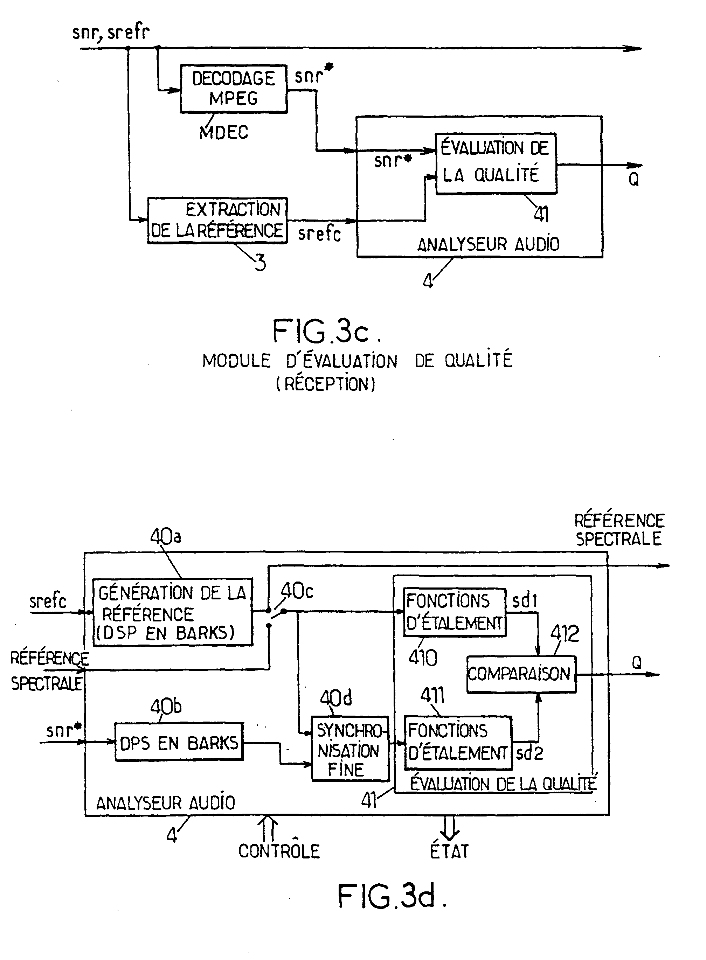

Enfin, le système d'évaluation à la réception de la qualité d'un signal audionumérique diffusé, objet de la présente invention, comprend, ainsi que représenté en figure 3c, au niveau du point de réception du réseau de transmission et en aval d'un dispositif de réception de ce réseau de transmission du signal audionumérique diffusé, un module d'évaluation de la qualité en réception.

De manière plus spécifique, on indique que le dispositif de réception délivre un train numérique formé par un signal audionumérique codé reçu, noté snr sur la figure 3c, et un signal de référence reçu, noté srefr.

Le système d'évaluation à la réception de la qualité du signal audionumérique diffusé, objet de la présente invention, comporte alors au moins, formant le module d'évaluation de qualité précité, un module auxiliaire de décodage du signal audionumérique codé reçu, ce module auxiliaire de décodage étant noté MDEC et délivrant un signal audionumérique codé-décodé reçu, noté snr*.

Bien entendu, lorsque le signal audionumérique diffusé est constitué par un signal de télévision numérique codé selon un codage de type MPEG, le module de décodage MDEC est un module de décodage MPEG, lequel délivre le signal audionumérique codé-décodé reçu, noté snr*.

Le module d'évaluation de qualité comporte en outre, ainsi que représenté sur la figure 3c précitée, un module portant la référence 3 d'extraction du signal de référence reçu, recevant le train numérique précité snr, srefr et délivrant un signal de référence de contrôle, noté srefc. En outre, un module 4 d'évaluation de la qualité de la transmission du signal audionumérique diffusé reçoit le signal audionumérique codé-décodé reçu snr* et le signal de référence de contrôle srefc et délivre, sur critère d'identité séparant le signal audionumérique codé-décodé du signal de référence de contrôle, un signal représentatif d'une valeur de qualité à la réception a posteriori du signal audionumérique. Ce signal est noté Q sur la figure 3c. On indique que le module d'évaluation de la qualité de la transmission du signal audionumérique diffusé 4 précité constitue en fait un analyseur audio lorsque le signal numérique codé à évaluer est un signal audionumérique.

Une description plus détaillée de l'analyseur audio 4 précédemment mentionné sera maintenant donnée en liaison avec la figure 3d lorsque le signal numérique transmis est un signal audionumérique diffusé. Dans ce cas, ainsi que représenté sur la figure 3d précitée, le module 4 comprend un module de calcul de la densité spectrale de puissance du signal de référence de contrôle, délivrant un signal représentatif de la densité spectrale de puissance du signal de référence de contrôle, ce module portant la référence 40a. Lorsque le signal numérique transmis par diffusion est un signal audionumérique, le module de calcul 40a est un module de calcul de la densité spectrale de puissance en barks, ainsi qu'il a été mentionné préalablement dans la description dans le cadre de la mise en oeuvre du procédé, objet de la présente invention.

De la même manière, le module 4 comprend un module 40b de calcul de la densité spectrale de puissance du signal numérique codé-décodé reçu snr* délivrant un signal représentatif de la densité spectrale de puissance du signal numérique codé-décodé reçu snr*. Lorsque, de la même manière, le signal numérique codé-décodé est un signal numérique snr, le module de calcul 40b permet de calculer la densité spectrale de puissance en barks. Les modules 40a et 40b précités sont suivis en outre du module 41 d'évaluation de la qualité du signal numérique, ce module 41 comportant, ainsi que représenté en figure 3d, un premier module d'étalement de spectre 410 recevant le signal représentatif de la densité spectrale de puissance du signal de référence par l'intermédiaire d'un commutateur 40c, ce module d'étalement 410 délivrant un premier signal de calcul de distance, noté $sd_1$. Un deuxième module d'étalement de spectre 411 est prévu, lequel reçoit le signal représentatif de la densité spectrale de puissance du signal numérique codé-décodé reçu et délivre un deuxième signal de calcul de distance $sd_2$.

Bien entendu, un module de synchronisation fine 40d est interconnecté entre le deuxième module d'étalement de spectre 411 et la sortie du module de calcul 40a par l'intermédiaire de l'élément de commutation 40c et la sortie du module 40b de calcul de la densité spectrale de puissance du signal numérique. Le module de synchronisation fine réalise en position convenable de commutation du commutateur 40c délivrant à ce dernier le signal représentatif de la densité spectrale de puissance du signal de référence, une synchronisation des deux signaux précités, signal représentatif de la densité spectrale de puissance du signal de référence et signal représentatif de la densité spectrale de puissance du signal numérique, de manière semblable au mode opératoire précédemment décrit en liaison avec la figure 2d dans la description, dans le cadre de la mise en oeuvre du procédé, objet de la présente invention. Un signal numérique codé-décodé reçu synchronisé est délivré au deuxième module d'étalement de spectre 411.

Enfin, le module 41 comprend un module de calcul 412 de distance recevant le premier et le deuxième signal de calcul de distance $sd_1$, $sd_2$, et délivre le signal représentatif d'une valeur de qualité à la réception, qualité a posteriori du signal audionumérique.

## Revendications

1. Procédé d'évaluation, à la réception, de la qualité d'un signal numérique (sn) diffusé en émission à partir d'un signal d'origine (so), **caractérisé en ce que** ce procédé consiste :

   ■ à l'émission,

   - à engendrer (1001) un signal de référence (sref) représentatif dudit signal d'origine ;
   - à diffuser conjointement (1002) ledit signal numérique (sn) et ledit signal de référence (sref), et

   ■ à la réception,

   - à synchroniser (2001) ledit signal numérique diffusé reçu (snr) et ledit signal de référence diffusé reçu (srefr) ;
   - à calculer (2002) une valeur de différence entre ledit signal numérique diffusé reçu (snr) et ledit signal de référence diffusé reçu (srefr) ;
   - à estimer (2003), sur critère de la valeur de différence, une qualité de la réception dudit signal numérique.

2. Procédé selon la revendication 1, **caractérisé en ce que**, à la réception :

   - on calcule (2002) une valeur de distance séparant ledit signal numérique diffusé reçu (snr) dudit signal de référence diffusé reçu (srefr) ; et
   - on attribue (2003), sur critère de valeur de ladite valeur de distance, une valeur de qualité à la réception dudit signal numérique.

3. Procédé selon la revendication 1, **caractérisé en ce que**, pour une évaluation en temps réel non continue de la qualité d'un signal numérique (sn) diffusé en émission, l'étape de génération dudit signal de référence consiste à engendrer (1001a) une séquence de signal numérique arbitraire, ladite séquence arbitraire étant en outre constitutive dudit signal d'origine (so), ladite étape (2002) de calcul d'une valeur de différence entre le signal numérique diffusé reçu (snr) et le signal de référence diffusé reçu (srefr) étant conduite entre ce signal numérique diffusé reçu et ladite séquence arbitraire.

4. Procédé selon la revendication 2, **caractérisé en ce que**, pour une évaluation en temps réel de la qualité d'un signal numérique diffusé en émission, l'étape de génération dudit signal de référence consiste :

   - à échantillonner (1001a') par tranches temporelles successives discrètes ledit signal d'origine (so) ;
   - à diffuser conjointement certaines tranches temporelles successives (1001b'), (1001c'), (1002) avec le signal numérique, pour constituer ledit signal de référence (sref).

5. Procédé selon les revendications 2 et 4, **caractérisé en ce que** ladite étape de calcul de la valeur de distance consiste :

   - à calculer la distance élémentaire $d_i$ séparant des tranches temporelles du signal numérique diffusé reçu (snr) de tranches temporelles correspondantes du signal de référence diffusé reçu (srefr) ;
   - à calculer la moyenne temporelle des distances élémentaires de l'ensemble des tranches temporelles.

6. Procédé selon l'une des revendications 4 et 5, **caractérisé en ce que**, pour une diffusion conjointe périodique de certaines tranches temporelles successives à raison d'une tranche temporelle parmi M tranches temporelles successives, pour constituer ledit signal de référence (sref), ladite valeur de différence entre ledit signal numérique diffusé reçu (snr) et ledit signal de référence (sref) vérifie la relation :

$$D = \frac{1}{N/M} \sum_{i=0}^{(N/M)-1} d_i$$

relation dans laquelle :

N désigne le nombre de tranches temporelles successives,
M désigne un nombre entier, supérieur à 1.

7. Procédé selon l'une des revendications 2 à 6, **caractérisé en ce que**, pour une évaluation en temps réel de la qualité d'un signal numérique diffusé, ladite étape de synchronisation du signal numérique diffusé reçu et du signal de référence diffusé reçu consiste, à partir d'une plage temporelle (P) déterminée de vraisemblance du synchronisme de ce signal numérique diffusé reçu (snr) et du signal de référence diffusé reçu (srefr) :

  - à subdiviser ledit signal numérique diffusé reçu (snr) pendant chaque plage temporelle en tranches temporelles $T_0$ à $T_F$ successives décalées d'une valeur temporelle maximale $\delta T_k$ correspondant à l'incertitude maximale admissible de synchronisation effective entre ledit signal numérique diffusé reçu (snr) et ledit signal de référence (srefr) ;
  - à calculer une distance entre chaque tranche temporelle successive décalée $T_k$ dudit signal numérique diffusé reçu (snr) et ledit signal de référence (srefr) ;
  - à retenir comme valeur de synchronisation le rang $i_s$ de la tranche temporelle dudit signal numérique diffusé reçu pour lequel la distance calculée avec ledit signal de référence est minimale, selon la relation min $dT_k \Rightarrow i_s = k$.

8. Procédé selon la revendication 7, **caractérisé en ce que** ladite distance est l'écart à la valeur de l'unité de la fonction d'inter-corrélation respectivement la distance perceptuelle pour un signal audionumérique entre chaque tranche temporelle successive

$T_k$ décalée et le signal de référence $R_j$.

9. Procédé selon la revendication 8, **caractérisé en ce que**, pour un signal de référence (srefr) constitué par certaines tranches temporelles successives du signal d'origine, de valeur temporelle déterminée, lesdites tranches temporelles successives décalées ont une valeur temporelle égale à ladite valeur temporelle déterminée, la valeur de la fonction d'intercorrélation étant calculée entre chaque tranche temporelle successive décalée du signal numérique diffusé reçu et chacune desdites certaines tranches temporelles successives du signal d'origine constitutives du signal de référence.

10. Procédé selon l'une des revendications 1 à 9, **caractérisé en ce que** ladite étape de calcul de différence comporte le calcul d'une différence entre densités spectrales de puissance respectives du signal de référence diffusé reçu (srefr) et du signal numérique diffusé reçu (snr).

11. Procédé selon les revendications 2 et 10, **caractérisé en ce que** ladite étape de calcul de distance consiste, pour au moins une tranche temporelle dudit signal numérique diffusé reçu :

  - à calculer (2002a1) la densité spectrale de puissance du signal de référence diffusé reçu (srefr) pour engendrer un signal de densité spectrale de puissance du signal de référence diffusé reçu, respectivement (2002a2) du signal numérique diffusé reçu (snr) ;
  - à appliquer à chaque signal de densité spectrale de puissance (dsrefr, dsnr) un traitement d'étalement de spectre de fréquence (2002b1, 2002b2) pour engendrer un signal de densité spectrale de puissance étalée du signal de référence, respectivement un signal de densité spectrale de puissance étalée du signal numérique diffusé reçu ;
  - à comparer (2002c) le signal de densité spectrale de puissance étalée du signal de référence diffusé reçu et le signal de densité spectrale de puissance étalée du signal numérique diffusé reçu pour engendrer (2002d) une valeur de distance (D).

12. Procédé selon l'une des revendications 3 à 11, **caractérisé en ce que**, pour un signal numérique formé par un signal audionumérique, ladite étape de génération dudit signal de référence consiste :

  - à échantillonner par tranches temporelles successives discrètes ledit signal d'origine ;
  - à calculer pour chaque tranche temporelle successive discrète échantillonnée la densité spectrale de puissance pour engendrer un signal de densité spectrale de puissance de chaque tranche échantillonnée ;

- à diffuser conjointement avec le signal audionumérique ledit signal de densité spectrale de puissance de chaque tranche échantillonnée pour constituer ledit signal de référence, ce qui permet de réduire le débit numérique nécessaire à la transmission du signal de référence.

13. Procédé selon les revendications 2 et 12, **caractérisé en ce que** ladite étape de calcul de distance consiste, pour au moins une tranche temporelle dudit signal de référence diffusé reçu, constitué par ledit signal de densité spectrale de puissance de chaque tranche échantillonnée :

- à calculer (200a2) la densité spectrale de puissance du signal audionumérique diffusé reçu (snr) pour engendrer un signal de densité spectrale de puissance du signal audionumérique diffusé reçu (dsnr) ;
- à appliquer (200b1) au signal de référence diffusé reçu, constitué par ledit signal de densité spectrale de puissance de chaque tranche échantillonnée et au signal de densité spectrale de puissance du signal audionumérique diffusé reçu, un traitement (200b1, 200b2) d'étalement de spectre de fréquence pour engendrer un signal de densité spectrale de puissance étalée du signal de référence, respectivement un signal de densité spectrale de puissance étalée du signal audionumérique diffusé reçu ;
- à comparer (2002d) le signal de densité spectrale de puissance étalée du signal de référence diffusé reçu et le signal de densité spectrale de puissance étalée du signal audionumérique diffusé reçu pour engendrer une valeur de distance (D).

14. Système d'évaluation de la qualité d'un signal audionumérique (sn) diffusé en émission à partir d'un signal d'origine (so), dans un réseau de transmission par diffusion comportant, côté émission et en amont d'un dispositif d'émission dudit signal audionumérique diffusé, des moyens (MC) de codage dudit signal d'origine en un signal numérique codé (snc),

    **caractérisé en ce qu'**il comporte au moins, en amont dudit dispositif d'émission :

- des moyens (1) générateurs d'un signal de référence (sref), à partir dudit signal d'origine (so),
- et, recevant ledit signal audionumérique codé (snc) et ledit signal de référence (sref), des moyens (2) d'insertion dudit signal de référence (sref) dans le train numérique dudit signal numérique codé (snc), pour engendrer un signal codé d'émission (snc,sref), permettant d'engendrer ledit signal audionumérique diffusé.

15. Système d'évaluation selon la revendication 14, **caractérisé en ce que** celui-ci comporte en outre :

- des moyens (MDEC) de décodage du signal numérique codé délivrant un signal numérique reconstitué (sn*) ;
- des moyens (1a) d'évaluation de la qualité a priori du signal codé d'émission, lesdits moyens (1a) d'évaluation a priori recevant ledit signal numérique reconstitué (sn*) et ledit signal de référence (sref) et délivrant un signal représentatif de la qualité du signal codé d'émission.

16. Système d'évaluation selon l'une des revendications 14 et 15, destiné à un réseau de transmission par diffusion d'un signal numérique diffusé en émission à partir d'un signal d'origine, ce signal numérique diffusé étant formé à partir d'un signal numérique codé dans lequel est inséré un signal de référence (sref) représentatif de ce signal d'origine, ce réseau de transmission comportant un dispositif de réception de ce signal numérique diffusé délivrant un train numérique formé par un signal numérique codé reçu (snr) et un signal de référence reçu (srefr),

    **caractérisé en ce qu'**il comporte en outre, en aval dudit dispositif de réception, au moins :

- des moyens auxiliaires (MDEC) de décodage dudit signal numérique codé reçu (snr) recevant ledit signal numérique codé reçu et délivrant un signal numérique codé - décodé (snr*) ;
- des moyens (3) d'extraction dudit signal de référence diffusé reçu (srefr) recevant ledit train numérique et délivrant un signal de référence de contrôle (srefc);
- des moyens (4) d'évaluation de la qualité de la transmission du signal numérique diffusé recevant ledit signal numérique codé - décodé (snr*) et ledit signal de référence de contrôle (srefc), et délivrant, sur critère de valeur de différence entre ledit signal numérique codé - décodé (snr*) et ledit signal de référence de contrôle (srefc), un signal (Q) représentatif d'une valeur de qualité à la réception, a posteriori dudit signal numérique.

17. Système d'évaluation selon la revendication 16, **caractérisé en ce que** la valeur de différence est une valeur de distance entre ledit signal numérique codé - décodé (snr*) et ledit signal de référence de contrôle (srefc).

**18.** Système d'évaluation selon la revendication 17, **caractérisé en ce que** lesdits moyens (4) d'évaluation de la qualité de la transmission du signal numérique diffusé comprennent au moins :

- des moyens de calcul (40a) de la densité spectrale de puissance du signal de référence de contrôle (srefc) délivrant un signal représentatif de la densité spectrale de puissance du signal de référence de contrôle ;
- des premiers moyens (410) d'étalement de spectre recevant le signal représentatif de la densité spectrale de puissance du signal de référence de contrôle et délivrant un premier signal ($sd_1$) de calcul de la distance ;
- des moyens de calcul (40b) de la densité spectrale de puissance dudit signal numérique codé - décodé (snr*) délivrant un signal représentatif de la densité spectrale de puissance du signal numérique codé - décodé ;
- des deuxièmes moyens (411) d'étalement de spectre recevant le signal représentatif de la densité spectrale de puissance du signal numérique codé - décodé et délivrant un deuxième signal ($sd_2$) de calcul de distance ;
- des moyens de calcul (412) de distance recevant le premier ($sd_1$) et le deuxième ($sd_2$) signal de calcul de distance et délivrant ledit signal (Q) représentatif d'une valeur de qualité à la réception a posteriori dudit signal audionumérique.

**Claims**

**1.** A method of evaluating on reception the quality of a broadcast digital signal (sn) emitted from an initial signal (so) **characterised in that** the method consists in:

- · on emission,

    - generating (1001) a reference signal (serf) representative of said initial signal;
    - broadcasting (1002) said digital signal (sn) and said reference signal (serf) jointly and

- · on reception,

    - synchronising (2001) said broadcast digital signal received (snr) and said broadcast reference signal received (srefr);
    - computing (2002) a difference value between said broadcast digital signal received (snr) and said broadcast reference signal received (srefr);
    - estimating (2003), upon a criterion of the difference value, a quality of said digital signal on reception.

**2.** A method according to claim 1, **characterised in that**, on reception:

- a distance value separating said broadcast digital signal received (snr) from said broadcast reference signal received (srefr) is computed (2002); and
- upon a value criterion of said distance value, a quality value of said digital signal on reception is assigned (2003).

**3.** A method according to claim 1, **characterised in that** in order to perform a non-continuous evaluation in real time of the quality of a broadcast digital signal (sn) being emitted, the step at which said reference signal is generated consists in generating (1001a) an arbitrary digital signal sequence, said arbitrary sequence also forming part of said initial signal (so), said step (2002) of computing a difference value between the broadcast digital signal received (snr) and said broadcast reference signal received (srefr), being applied between this broadcast digital signal received and said arbitrary sequence.

**4.** A method according to claim 2, **characterised in that** in order to perform an evaluation in real time of the quality of a broadcast digital signal being emitted, the step at which said reference signal is generated consists in:

- sampling (1001a') said initial signal by discrete successive time segments (so);
- broadcasting certain successive time segments (1001b', 1001c', 1002) jointly with the digital signal to form said reference signal (sref).

**5.** A method according to claims 2 and 4, **characterised in that** said step of computing the distance value consists in:

- computing the elementary distance $d_i$ separating the time segments of the broadcast digital signal received (snr) from corresponding time segments of the broadcast reference signal received (srefr);
- computing the average time of the elementary distances of all the time segments.

**6.** A method according to one of claims 4 and 5, **characterised in that** in order to periodically broadcast certain successive time segments jointly on the basis of one in M successive time segments, to form said reference signal (srefr), said difference value between said broadcast digital signal received (snr) and said reference signal (srefr) verifies the equation:

$$D = \frac{1}{N/M} \sum_{i=0}^{N/M-1} d_i$$

in which equation:

N    denotes the number of successive time segments

M    denotes an integer number greater than 1.

7. A method according to one of claims 2-6, **characterised in that** in order to evaluate the quality of a broadcast digital signal in real time, said step of synchronizing the broadcast digital signal received with the broadcast reference signal received consists from a given time range (P) of synchronization likelihood of this broadcast digital signal received (snr) with the broadcast reference signal received (srefr) in:

- sub-dividing said broadcast digital signal received (snr) during each time range into successive time segments $T_0$ to $T_F$ shifted by a maximum time value $\delta T_k$ corresponding to the effective maximum admissible uncertainty of synchronization between said broadcast digital signal received (snr) and said reference signal (srefr);
- computing a distance between each shifted successive time segment $T_k$ of said broadcast digital signal received (snr) and said reference signal (srefr);
- retaining as the synchronization value the rank $i_s$ of the time segment of said broadcast digital signal received for which the distance computed with said reference signal is minimal, according to the equation:

$$\min \delta T_k => i_s = k.$$

8. A method according to claim 7, **characterised in that** said distance is the variance to the unit value of the inter-correlation function, or the perceptual distance in the case of a digital audio signal, between each shifted successive time segment $T_k$ and the reference signal $R_j$.

9. A method according to claim 8, **characterised in that** for a reference signal (srefr) made up of certain successive time segments of the initial signal, of a given time value, said shifted successive time segments have a time value equal to said given time value, the value of the inter-correlation function being computed between each shifted successive time segment of the broadcast digital signal received and each of said certain successive time segments of the initial signal constituting the reference signal.

10. A method according to one of claims 1 to 9, **characterised in that** said difference computing step comprises the computing of a difference between respective power spectral densities of said broadcast reference signal received (srefr) and said broadcast digital signal received (snr).

11. A method according to claims 2 and 10, **characterised in that** said distance computing step consists, for at least one time segment of said broadcast digital signal received, in:

- computing (2002a1) the power spectral density of the broadcast reference signal received (srefr) in order to generate a power spectral density signal from the broadcast reference signal received and respectively (2002a2) from the broadcast digital signal received (snr);
- applying a frequency spreading process (2002b1,2002b2) to each power spectral density signal (dsrefr,dsnr) in order to generate a spread power spectral density signal from the reference signal and respectively a spread power spectral density signal from the broadcast digital signal received;
- comparing (2002c) the spread power spectral density signal of the broadcast reference signal received and the spread power spectral density signal of the broadcast digital signal received to generate (2002d) a distance value (D).

12. A method according to one of claims 3 to 11, **characterised in that** for a digital signal formed by a digital audio signal, said step of generating said reference signal consists in:

- sampling said initial signal by successive discrete time segments;
- computing the power spectral density for each successive discrete time segment sampled in order to generate a power spectral density signal for each sampled segment;
- broadcasting said power spectral density signal of each sampled time segment jointly with the digital audio signal in order to form said reference signal, which allows the digital rate needed to transmit the reference signal to be reduced.

13. A method according to claims 2 and 12, **characterised in that** said distance computing step consists, for at least one time segment of said broadcast reference signal received, being said power spectral density signal of each sampled segment, in:

- computing (200a2) the power spectral density of the broadcast digital audio signal received (snr) in order to generate a power spectral density signal from the broadcast digital audio signal received (dsnr);
- applying (200b1) a frequency spreading process to the broadcast reference signal received, being said power spectral density signal of each sampled time segment, and to the power spectral density signal of the broadcast digital audio signal received in order to generate a spread power spectral density signal from the reference signal and respectively a spread power spectral density signal from the broadcast digital audio signal received;
- comparing (2002d) the spread power spectral density signal of the broadcast reference signal received and the spread power spectral density signal of the broadcast digital audio signal received in order to generate a distance value (D).

14. System for evaluating the quality of an audio digital signal (sn) broadcast on emission from an initial signal (so), in a broadcast transmission network having, upstream of a device for emitting a broadcast digital audio signal, means (MC) for coding this initial signal to produce a coded digital signal (snc),
    **characterized in that** it comprises at least, upstream said emitting device:

    - means (1) for generating a reference signal (sref) from said initial signal (so),
    - and, receiving said coded digital audio signal (snc) and said reference signal (sref), means (2) for inserting said reference signal (sref) in the digital stream of said coded digital signal (snc) in order to create a coded emission signal (snc, sref)) allowing said broadcast digital audio signal to be generated.

15. An evaluating system according to claim 14, **characterised in that** it also comprises:

    - means (MDEC) for decoding the coded digital signal and issuing a reconstituted digital signal (sn*);
    - means (1a) for evaluating a priori the quality of the coded emission signal, said a priori evaluating means (1a) receiving said reconstituted digital signal (sn*) and said reference signal (sref) and issuing a signal representative of the quality of the coded emission signal.

16. An evaluating system according to claims 14 or 15, intended to a transmission network for broadcasting a broadcast digital audio signal emitted from an initial signal, this broadcast digital signal being formed from a coded digital signal in which a reference signal (sref) representative of this initial signal is inserted, this transmission network having a device for receiving this broadcast digital signal which issues a digital stream formed by a coded digital signal received (snr) and a reference signal received (srefr),
    **characterized in that** it further comprises, downstream of said receiving device:

    - auxiliary means (MDEC) for decoding said coded digital signal received (snr) which receives said coded digital signal received and issues a decoded-coded digital signal (snr*);
    - means (3) for extracting said broadcast reference signal received (srefr) which receives said digital stream and issues a control reference signal (srefc);
    - means (4) for evaluating the transmission quality of the broadcast digital signal which receives said decoded-coded digital signal (snr*) and said control reference signal (srefc) and for delivering by applying a difference value criterion between said decoded-coded digital signal (snr*) from said control reference signal (srefc), a signal (Q) representative of a quality value on reception a posteriori of said digital signal.

17. An evaluating system according to claim 16, **characterised in that** said difference value is a distance value between said decoded-coded digital signal (snr*) and said control reference signal (srefc).

18. An evaluating system according to claim 17, **characterised in that** said means (4) for evaluating the transmission quality of the broadcast digital signal comprise at least:

    - means (40a) for computing the power spectral density of the control reference signal (srefc) and issuing a signal representative of the power spectral density of the control reference signal;
    - first spectrum spreading means (410) receiving the signal representative of the power spectral density of the control reference signal and issuing a first distance computation signal $(sd_1)$;
    - means (40b) for computing the power spectral density of said decoded-coded digital signal (snr*) and issuing a signal representative of the power spectral density of said decoded-coded digital signal;
    - second spectrum spreading means (411) receiving the signal representative of the power spectral density of the decoded-coded digital signal and issuing a second distance computation signal $(sd_2)$;
    - distance computing means (412) receiving the first $(sd_1)$ and the second $(sd_2)$ distance com-

putation signal and issuing said signal (Q) representative of a quality value on reception a posteriori of said digital audio signal.

**Patentansprüche**

1. Verfahren zum empfangsseitigen Bewerten der Qualität eines ausgehend von einem Ursprungssignal (so) beim Senden ausgestrahlten digitalen Signals (sn),
**dadurch gekennzeichnet, dass** das Verfahren darin besteht,

- • beim Senden

  - - ein Referenz-Signal (sref) zu erzeugen (1001), das für das Ursprungssignal repräsentativ ist;
  - - das digitale Signal (sn) und das Referenz-Signal (sref) gemeinsam auszustrahlen (1002), und

- • beim Empfang

  - - das empfangene ausgestrahlte digitale Signal (snr) und das empfangene ausgestrahlte Referenz-Signal (srefr) zu synchronisieren (2001);
  - - einen Differenzwert zwischen dem empfangenen ausgestrahlten digitalen Signal (snr) und dem empfangenen ausgestrahlten Referenz-Signal (srefr) zu berechnen (2002);
  - - eine Empfangsqualität des digitalen Signals anhand des Kriteriums des Differenzwertes zu bewerten.

2. Verfahren nach Anspruch 1,
**dadurch gekennzeichnet, dass** beim Empfang:

- - ein Abstandswert berechnet wird (2002), der das empfangene ausgestrahlte digitale Signal (snr) von dem empfangenen ausgestrahlten Referenz-Signal (srefr) trennt; und
- - anhand des Wertekriteriums des Abstandswertes dem Empfang des digitalen Signals ein Qualitätswert zugewiesen wird (2003).

3. Verfahren nach Anspruch 1,
**dadurch gekennzeichnet, dass** für eine nicht kontinuierliche Bewertung in Echtzeit der Qualität eines beim Senden ausgestrahlten digitalen Signals (sn) der Schritt zum Erzeugen des Referenz-Signals darin besteht, eine beliebige Sequenz des digitalen Signals zu erzeugen (1001a), wobei die beliebige Sequenz ferner Bestandteil des Ursprungssignals (so) ist, wobei der Schritt (2002) zum Berechnen eines Differenzwertes zwischen dem empfangenen ausgestrahlten digitalen Signal (snr) und dem empfangenen ausgestrahlten Referenz-Signal (srefr) zwischen dem empfangenen ausgestrahlten digitalen Signal und der beliebigen Sequenz erfolgt.

4. Verfahren nach Anspruch 2,
**dadurch gekennzeichnet, dass** für eine Bewertung in Echtzeit der Qualität eines ausgestrahlten digitalen Signals der Schritt zum Erzeugen des Referenz-Signals darin besteht:

- - das Ursprungssignal (so) in aufeinander folgenden diskreten Zeitabschnitten abzutasten (1001a');
- - bestimmte aufeinander folgende Zeitabschnitte (1001b'), (1001c'), (1002) gemeinsam mit dem digitalen Signal auszustrahlen, um das Referenz-Signal (sref) zu bilden.

5. Verfahren nach den Ansprüchen 2 und 4,
**dadurch gekennzeichnet, dass** der Schritt zum Berechnen des Abstandswertes darin besteht:

- - den Grundabstand $|d_i|$ zu berechnen, der Zeitabschnitte des empfangenen ausgestrahlten digitalen Signals (snr) von entsprechenden Zeitabschnitten des empfangenen ausgestrahlte Referenz-Signals (srefr) trennt;
- - den Zeitmittelwert der Grundabstände sämtlicher Zeitabstände zu berechnen.

6. Verfahren nach einem der Ansprüche 4 oder 5,
**dadurch gekennzeichnet, dass** für ein gemeinsames periodisches Ausstrahlen bestimmter aufeinander folgender Zeitabschnitte auf der Grundlage eines Zeitabschnitts unter M aufeinander folgender Zeitabschnitte zum Bilden des Referenz-Signals (sref) der Differenzwert zwischen dem empfangenen ausgestrahlten digitalen Signal (snr) und dem Referenz-Signal (sref) die Relation:

$$D = \frac{1}{N/M} \sum_{i=0}^{(N/M)-1} d_i$$

überprüft, bei der:

N die Anzahl aufeinander folgender Zeitabschnitte bezeichnet,
M eine ganze Zahl größer 1 bezeichnet.

7. Verfahren nach einem der Ansprüche 2 bis 6,
**dadurch gekennzeichnet, dass** für eine Bewertung in Echtzeit der Qualität eines ausgestrahlten digitalen Signals der Schritt zum Synchronisieren des empfangenen ausgestrahlten digitalen Signals und des empfangenen ausgestrahlten Referenz-Signals, ausgehend von einem bestimmten Zeitbereich (P) der Wahrscheinlichkeit der Synchronisation des empfangenen ausgestrahlten digitalen Signals (snr) und des empfangenen ausgestrahlten Referenz-Signals (srefr), darin besteht:

- das empfangene ausgestrahlte digitale Signal (snr) während eines jeden Zeitbereichs in aufeinander folgende Zeitabschnitte $|T_0$ bis $T_F|$ zu unterteilen, die um einen maximalen Zeitwert $|\delta T_k|$ versetzt sind, der der maximal zulässigen Unsicherheit der effektiven Synchronisation zwischen dem empfangenen ausgestrahlten digitalen Signal (snr) und dem Referenz-Signal (srefr) entspricht;
- einen Abstand zwischen jedem versetzten aufeinander folgenden Zeitabschnitt $|T_k|$ des empfangenen ausgestrahlten digitalen Signals (snr) und dem Referenz-Signal (srefr) zu berechnen;
- den Rang $|i_s|$ des Zeitabschnitts des empfangenen ausgestrahlten digitalen Signals, für das der zu dem Referenz-Signal berechnete Abstand minimal ist, als Synchronisationswert gemäß der Relation $|dT_k \Rightarrow I_s = k|$ heranzuziehen.

8. Verfahren nach Anspruch 7, **dadurch gekennzeichnet, dass** der Abstand der Unterschied zu dem Übereinstimmungswert der Kreuzkorrelationsfunktion beziehungsweise der für ein digitales Tonsignal wahrnehmbare Abstand zwischen jedem versetzten aufeinander folgenden Zeitabschnitt und dem Referenz-Signal $|R_j|$ ist.

9. Verfahren nach Anspruch 8, **dadurch gekennzeichnet, dass** für ein aus bestimmten aufeinander folgenden Zeitabschnitten des Ursprungssignals gebildetes Referenz-Signal (srefr) mit bestimmtem Zeitwert die versetzten aufeinander folgenden Zeitabschnitte einen Zeitwert haben, der dem bestimmten Zeitwert entspricht, wobei der Wert der Kreuzkorrelationsfunktion zwischen jedem versetzten aufeinander folgendem Zeitabschnitt des empfangenen ausgestrahlten digitalen Signals und jedem der das Referenz-Signal bildenden, bestimmten aufeinander folgenden Zeitabschnitte des Ursprungssignals berechnet wird.

10. Verfahren nach einem der Ansprüche 1 bis 9, **dadurch gekennzeichnet, dass** der Schritt zum Berechnen des Unterschieds das Berechnen eines Unterschieds zwischen den jeweiligen Leistungsspektren des empfangenen ausgestrahlten Referenz-Signals (srefr) und des empfangenen ausgestrahlten digitalen Signals (snr) umfasst.

11. Verfahren nach den Ansprüchen 2 und 10,

**dadurch gekennzeichnet, dass** der Schritt zum Berechnen des Abstands für wenigstens einen Zeitabschnitt des empfangenen ausgestrahlten digitalen Signals darin besteht:

- das Leistungsspektrum des empfangenen ausgestrahlten Referenz-Signals (srefr) zu berechnen (2002a1), um ein Signal des Leistungsspektrums des empfangenen ausgestrahlten Referenz-Signals beziehungsweise (2002a2) des empfangenen ausgestrahlten digitalen Signals (snr) zu erzeugen;
- jedes Signal des Leistungsspektrums (dsrefr; dsnr) einer Verarbeitung zur Spreizung des Frequenzspektrums (2002b1, 2002b2) zu unterziehen, um ein Signal des gespreizten Leistungsspektrums des Referenz-Signals beziehungsweise ein Signal des gespreizten Leistungsspektrums des empfangenen ausgestrahlten digitalen Signals zu erzeugen;
- das Signal des gespreizten Leistungsspektrums des empfangenen ausgestrahlten Referenz-Signals und das Signal des gespreizten Leistungsspektrums des empfangenen ausgestrahlten digitalen Signals miteinander zu vergleichen (2002c), um einen Abstandswert (D) zu erzeugen (2002d).

12. Verfahren nach einem der Ansprüche 3 bis 11, **dadurch gekennzeichnet, dass** für jedes durch ein digitales Tonsignal gebildetes digitales Signal der Schritt zum Erzeugen des Referenz-Signals darin besteht:

- das Ursprungssignal in aufeinander folgenden diskreten Zeitabschnitten abzutasten;
- für jeden abgetasteten aufeinander folgenden diskreten Zeitabschnitt das Leistungsspektrum zu berechnen, um für jeden abgetasteten Abschnitt ein Signal des Leistungsspektrums zu erzeugen;
- das Signal des Leistungsspektrums eines jeden abgetasteten Abschnitts gemeinsam mit dem digitalen Tonsignal zum Bilden des Referenz-Signals auszustrahlen, wodurch die für die Übertragung des Referenz-Signals erforderliche Bitrate verringert werden kann.

13. Verfahren nach den Ansprüchen 2 und 12, **dadurch gekennzeichnet, dass** für wenigstens einen Zeitabschnitt des empfangenen ausgestrahlten Referenz-Signals, das durch das Signal des Leistungsspektrums eines jeden abgetasteten Abschnitts gebildet wird, der Schritt zum Berechnen des Abstands darin besteht:

- das Leistungsspektrum des empfangenen ausgestrahlten digitalen Tonsignals (snr) zu berechnen (200a2), um ein Signal des Leistungsspektrums des empfangenen ausgestrahlten digitalen Tonsignals (dsnr) zu erzeugen;

- das empfangene ausgestrahlte Referenz-Signal, das durch das Signal des Leistungsspektrums eines jeden abgetasteten Abschnitts gebildet wird, und das Signal des Leistungsspektrums des empfangenen ausgestrahlten digitalen Tonsignals einer Verarbeitung (200b1, 200b2) zur Spreizung des Frequenzspektrums zu unterziehen (200b1), um ein Signal des gespreizten Leistungsspektrums des Referenz-Signals beziehungsweise ein Signal des gespreizten Leistungsspektrums des empfangenen ausgestrahlten digitalen Signals zu erzeugen;

- das Signal des gespreizten Leistungsspektrums des empfangenen ausgestrahlten Referenz-Signals und das Signal des gespreizten Leistungsspektrums des empfangenen ausgestrahlten digitalen Tonsignals miteinander zu vergleichen (2002d), um einen Abstandswert (D) zu erzeugen.

14. System zum Bewerten der Qualität eines ausgehend von einem Ursprungssignal (so) beim Senden ausgestrahlten digitalen Tonsignals (sn) in einem Ausstrahl-Übertragungsnetz, das sendeseitig vor einer Vorrichtung zum Senden des ausgestrahlten digitalen Tonsignals Mittel (MC) zum Codieren des Ursprungssignals in ein codiertes digitales Signal (snc) umfasst,
**dadurch gekennzeichnet, dass** es vor der Sendevorrichtung wenigstens umfasst:

- Mittel (1) zum Erzeugen eines Referenz-Signals (sref) ausgehend von dem Ursprungssignal (so),

- und beim Empfang des codierten digitalen Tonsignals (snc) und des Referenz-Signals (sref) Mittel (2) zum Einfügen des Referenz-Signals (sref) in die Digitalfolge des codierten digitalen Signals (snc), um ein codiertes Sendesignal (snc, sref) zu erzeugen, wodurch das Erzeugen des ausgestrahlten digitalen Tonsignals ermöglicht wird.

15. Bewertungssystem nach Anspruch 14,
**dadurch gekennzeichnet, dass** es ferner umfasst:

- Mittel (MDEC) zum Decodieren des codierten digitalen Signals, die ein wiederhergestelltes digitales Signal (sn*) abgeben;

- Mittel (1a) zum vorherigen Bewerten der Qualität des codierten Sendesignals, wobei die Mittel (1a) zum vorherigen Bewerten das wiederhergestellte digitale Signal (sn*) und das Referenz-Signal (sref) empfangen und ein Signal abgeben, das für die Qualität des codierten Sendesignals repräsentativ ist.

16. Bewertungssystem nach einem der Ansprüche 14 oder 15, das für ein Übertragungsnetz zur Streuausbreitung eines ausgehend von einem Ursprungssignal beim Senden ausgestrahlten digitalen Signals bestimmt ist, wobei das ausgestrahlte digitale Signal ausgehend von einem codierten digitalen Signal gebildet wird, in das ein für das Ursprungssignal repräsentatives Referenz-Signal (sref) eingefügt ist, wobei das Übertragungsnetz eine Vorrichtung zum Empfangen des ausgestrahlten digitalen Signals aufweist, die eine Digitalfolge liefert, die von einem empfangenen codierten digitalen Signal (snr) und einem empfangenen Referenz-Signal (srefr) gebildet wird,
**dadurch gekennzeichnet, dass** es ferner nach der Empfangsvorrichtung wenigstens umfasst:

- Hilfsmittel (MDEC) zum Decodieren des empfangenen codierten digitalen Signals (snr), die das empfangene codierte digitale Signal empfangen und ein codiertes/decodiertes digitales Signal (snr*) abgeben;

- Mittel (3) zum Auslesen des empfangenen ausgestrahlten Referenz-Signals (srefr), die die Digitalfolge empfangen und ein Kontroll-Referenz-Signal (srefc) abgeben;

- Mittel (4) zum Bewerten der Übertragungsqualität des ausgestrahlten digitalen Signals, die das codierte/decodierte digitale Signal (snr*) und das Kontroll-Referenz-Signal (srefc) empfangen und anhand des Kriteriums des Differenzwertes zwischen dem codierten/decodierten digitalen Signal (snr*) und dem Kontroll-Referenz-Signal (srefc) nach dem digitalen Signal ein Signal (Q) abgeben, das beim Empfang für einen Qualitätswert repräsentativ ist.

17. Bewertungssystem nach Anspruch 16,
**dadurch gekennzeichnet, dass** der Differenzwert ein Abstandswert zwischen dem codierten/decodierten digitalen Signal (snr*) und dem Kontroll-Referenz-Signal (srefc) ist.

18. Bewertungssystem nach Anspruch 17,
**dadurch gekennzeichnet, dass** die Mittel (4) zum Bewerten der Übertragungsqualität des ausgestrahlten digitalen Signals wenigstens umfassen:

- Mittel zum Berechnen (40a) des Leistungsspektrums des Kontroll-Referenz-Signals (srefc), die ein Signal abgeben, das für das Leistungsspektrum des Kontroll-Referenz-Signals repräsentativ ist;

- erste Mittel (410) zum Spreizen des Spektrums, die das für das Leistungsspektrum des Kontroll-Referenz-Signals repräsentative Signal empfangen und ein erstes Signal ($sd_1$) zum Berechnen des Abstands abgeben;

- Mittel zum Berechnen (40b) des Leistungsspektrums des codierten/decodierten digitalen Signals ($snr^*$), die ein für das Leistungsspektrum des codierten/decodierten digitalen Signals repräsentatives Signal abgeben;

- zweite Mittel (411) zum Spreizen des Spektrums, die das für das Leistungsspektrum des codierten/decodierten digitalen Signals repräsentative Signal empfangen und ein zweites Signal ($sd_2$) zum Berechnen des Abstands abgeben;

- Mittel zum Berechnen (412) des Abstands, die das erste ($sd_1$) und das zweite ($sd_2$) Signal zur Abstandsberechnung empfangen und nach dem digitalen Tonsignal das Signal (Q) abgeben, das beim Empfang für einen Qualitätswert repräsentativ ist.

EP 1 025 667 B1

# FIG.1.

| 1000 | SIGNAL D'ORIGINE SIGNAL NUMÉRIQUE |
|---|---|

↓ so, sn

| 1001 | CRÉATION D'UN SIGNAL DE RÉFÉRENCE |
|---|---|

↓ sref

| 1002 | DIFFUSION CONJOINTE DU SIGNAL NUMÉRIQUE ET DU SIGNAL DE RÉFÉRENCE |
|---|---|

} ÉMISSION

↓ sn, sref

TRANSMISSION

| 2000 | SIGNAL NUMÉRIQUE DIFFUSÉ REÇU SIGNAL DE RÉFÉRENCE DIFFUSÉ REÇU |
|---|---|

↓ snr, srefr

| 2001 | SYNCHRONISATION −SIGNAL NUMÉRIQUE DIFFUSÉ REÇU −SIGNAL DE RÉFÉRENCE DIFFUSÉ REÇU |
|---|---|

↓ snr, srefr

| 2002 | CALCUL VALEUR DISTANCE SÉPARANT −SIGNAL NUMÉRIQUE DIFFUSÉ REÇU −SIGNAL DE RÉFÉRENCE DIFFUSÉ REÇU |
|---|---|

} RECEPTION

↓ D

| 2003 | ATTRIBUTION SUR CRITÈRE DE VALEUR DE DISTANCE D'UNE VALEUR DE QUALITÉ. Q |
|---|---|

19

# FIG.2a.

↓ so, sn

**1001a** — ÉCHANTILLONNAGE DU SIGNAL D'ORIGINE (SÉQUENCE ARBITRAIRE)

↓ sA

**1002** — DIFFUSION CONJOINTE DU SIGNAL NUMÉRIQUE ET DE LA SÉQUENCE ARBITRAIRE

↓ sn, sA

ÉMISSION

# FIG.2b.

↓ so, sn

**1001a'** — ÉCHANTILLONNAGE DU SIGNAL D'ORIGINE SUR FENÊTRES SUCCESSIVES

**1001b'** — CHOIX D'UNE FENÊTRE PARMI M → SIGNAL DE RÉFÉRENCE sref

↓ sref

**1001c'** — CALCUL DE LA D S P sref ≡ dsref

**1002** — DIFFUSION CONJOINTE sn , sref

↓ sn, sref

ÉMISSION

Fi−M    Fi−1   Fi   Fi+1     Fi+M    t

DSPi−M     DSPi     DSPi+M    t

FIG.2c.  $D = \dfrac{1}{N} \displaystyle\sum_{i=0}^{N-1} di$

min dTk $\Rightarrow$ i$_s$ = k

PLAGE DE VRAISEMBLANCE
DE SYNCHRONISATION

FIG.2d.

FIG.2e.

FIG.2f.

FIG. 3a.
GÉNÉRATEUR DE SIGNAL DE RÉFÉRENCE
(EMISSION)

FIG. 3b.
GÉNÉRATEUR DE SIGNAL DE RÉFÉRENCE
(ÉMISSION)

snr, srefr

DECODAGE MPEG

MDEC

snr*

EXTRACTION DE LA RÉFÉRENCE

3

snr*

ÉVALUATION DE LA QUALITÉ

41

srefc

Q

ANALYSEUR AUDIO

4

## FIG.3c.
### MODULE D'ÉVALUATION DE QUALITÉ
### (RÉCEPTION)

RÉFÉRENCE SPECTRALE

40a

srefc

GÉNÉRATION DE LA RÉFÉRENCE (DSP EN BARKS)

40c

RÉFÉRENCE SPECTRALE

40b

snr*

DPS EN BARKS

FONCTIONS D'ÉTALEMENT

410

sd1

412

COMPARAISON

Q

40d

SYNCHRO-NISATION FINE

411

FONCTIONS D'ÉTALEMENT

sd2

ÉVALUATION DE LA QUALITÉ

41

ANALYSEUR AUDIO

4

CONTRÔLE

ÉTAT

## FIG.3d.